# EUROPÄISCHE PATENTSCHRIFT

(11) **EP 4 004 889 B1**
(45) Veröffentlichungstag und Bekanntmachung des Hinweises auf die Patenterteilung: **07.08.2024**
(21) Anmeldenummer: 20780940.1
(22) Anmeldetag: 11.09.2020
(51) Int. Cl.: G08B 13/196

(54) **VERFAHREN, VORRICHTUNG UND SCHIENENFAHRZEUG**
METHOD, DEVICE AND RAIL VEHICLE
PROCÉDÉ, DISPOSITIF ET VÉHICULE FERROVIAIRE

(30) Priorität: 26.09.2019 DE 102019214707
(43) Veröffentlichungstag der Anmeldung: 01.06.2022
(73) Patentinhaber: Siemens Mobility GmbH, 81739 München (DE)
(72) Erfinder: WOLF, Günter, 90425 Nürnberg (DE)
(74) Vertreter: Siemens Patent Attorneys
(86) Internationale Anmeldenummer: PCT/EP2020/075424
(87) Internationale Veröffentlichungsnummer: WO 2021/058301

(56) Entgegenhaltungen:
- DE-A1- 102016 215 524
- DE-A1- 102017 207 138
- US-A1- 2014 151 173
- US-A1- 2018 055 174
- US-B2- 9 974 371
- SOOYEONG KWAK, GUNTAE BAE, MANBAE KIM, HYERAN BYUN: "Unusual behavior detection in the entry gate scenes of subway station using Bayesian networks and inference", IMAGE PROCESSING MACHINE VISIONS APPLICATIONS, vol. 6813, 1 January 2008 (2008-01-01), XP040431379

## Beschreibung

Die Erfindung betrifft ein Verfahren und eine Vorrichtung zur Objektüberwachung mittels eines Videoüberwachungssystems für ein Schienenfahrzeug. Die Erfindung betrifft ferner ein Schienenfahrzeug mit einer solchen Vorrichtung.

Schienenfahrzeuge zur Beförderung von Personen weisen Überwachungssysteme auf, die zum Beispiel als digitale Videosysteme zum Aufzeichnen eines Fahrzeuginnenraums eingesetzt werden. Ein solches Videosystem ist in der Regel an einem Datennetzwerk angebunden, um die erfassten Videosignale zu übertragen. Dabei ist es ein Anliegen, eine zuverlässige Videoüberwachung bereitzustellen und eine genaue Beaufsichtigung des Fahrzeuginnenraums zu ermöglichen.

Die Druckschriften US 9 974 371 B2, US 2018/055174 A1, US 2014/151173 A1 und DE 10 2017 207138 A1 sowie der Aufsatz "Unusual behavior detection in the entry gate scenes of subway station using Bayesian networks and inference" von Sooyeong Kwak, Guntae Bae, Manbae Kim und Hyeran Byun, erschienen in Image Processing Machine Vision Applications, Bd. 6813, XP040431379, bilden allgemeinen Stand der Technik ab.

Die Offenlegungsschrift DE 10 2016 215524 A1 beschreibt ein gattungsgemäßes System und Verfahren zur Objekterkennung bei einem Fahrzeug.

Eine Aufgabe der vorliegenden Erfindung besteht darin, ein Verfahren und eine Vorrichtung zur Objektüberwachung mittels eines Videoüberwachungssystems für ein Schienenfahrzeug zu schaffen, das jeweils zu einer zuverlässigen Videoüberwachung und zu einem sicheren Betrieb des Schienenfahrzeugs beitragen kann.

Die Aufgabe wird durch ein Verfahren und eine Vorrichtung zur Objektüberwachung mittels eines Videoüberwachungssystems für ein Schienenfahrzeug mit den Merkmalen des jeweiligen unabhängigen Patentanspruchs sowie durch ein Schienenfahrzeug mit einer solchen Vorrichtung gelöst. Vorteilhafte Ausgestaltungen des Verfahrens sind in den abhängigen Patentansprüchen angegeben.

Gemäß einem Aspekt der Erfindung umfasst ein Verfahren zur Objektüberwachung mittels eines Videoüberwachungssystems für ein Schienenfahrzeug, dem eine Videokamera zugeordnet ist, ein Erfassen eines Messsignals der Videokamera, das repräsentativ ist für Bilddaten einer Umgebung eines Fahrzeuginnenraums des Schienenfahrzeugs, und ein Ermitteln von Bilddaten der Umgebung des Fahrzeuginnenraums in Abhängigkeit von dem erfassten Messsignal. Das Verfahren umfasst weiter ein Identifizieren eines Gepäckstücks in dem Fahrzeuginnenraum in Abhängigkeit von den ermittelten Bilddaten. Das Verfahren umfasst weiter ein Personalisieren des identifizierten Gepäckstücks. Das Verfahren umfasst weiter ein Ermitteln einer Manipulation des identifizierten Gepäckstücks in Abhängigkeit von einer vorgegebenen Manipulationsbedingung. Außerdem umfasst das Verfahren ein Senden eines Hinweissignals in Abhängigkeit von der ermittelten Manipulation und von dem Personalisieren des identifizierten Gepäckstücks.

Mittels des beschriebenen Verfahrens ist eine zuverlässige und personalisierte Gepäcküberwachung in einem Fahrzeuginnenraum eines Schienenfahrzeugs realisierbar. Eine solche Gepäcküberwachung ist insbesondere mit vorhandenen Videoüberwachungssystemen durchführbar, die üblicherweise in Schienenfahrzeugen verbaut sind.

Ein solches Videoüberwachungssystem umfasst zum Beispiel ein digitales Videosystem zum Aufzeichnen eines Fahrzeuginnenraums des Schienenfahrzeugs, eine sogenannte CCTV-Videoüberwachungsanlage (engl.: closed circuit television). Die Videokamera kann somit auch als CCTV-Kamera bezeichnet werden.

Es ist eine Erkenntnis im Zusammenhang mit der vorliegenden Erfindung, dass Passagiere in Schienenfahrzeugen ihr Gepäck häufig in Gepäckträgern oder Gepäckablagen aufbewahren, die von ihrem Sitzplatz aus nicht direkt sichtbar sind. Dies hinterlässt ein Gefühl der Unsicherheit in Bezug auf einen möglichen Diebstahl ihres Gepäcks oder Vandalismus daran. Mittels des beschriebenen Verfahrens können Passagiere gezielt gewarnt werden, wenn ihr Gepäck zum Beispiel bewegt wird, sodass sie rechtzeitig reagieren und zum Beispiel einen Kontrollblick auf ihr Gepäck richten können.

Das Videoüberwachungssystem umfasst in der Regel mehrere Videokameras, die einen jeweiligen Fahrzeuginnenraum beobachten und in deren Blick- oder Aufnahmefeld auch vorhandene Gepäckablagen erfasst sind. Eine Beobachtung des Fahrzeuginnenraums erfolgt zum Beispiel fortlaufend und das erfasste Bildmaterial wird herangezogen und ausgewertet, wenn beispielsweise ein Diebstahl oder ein Vandalismus aufgetreten ist oder gemeldet wurde. Auf Basis einer solchen Auswertung ist es dann gegebenenfalls möglich, Verdächtige zu identifizieren und eine Verfolgung zu ermöglichen. Allerdings ermöglicht dies kein zeitnahes Eingreifen hinsichtlich eines aktuell geschehenden Vorfalls, wenn zum Beispiel eine Person ein Gepäckstück unbefugt mitnimmt.

Gegebenenfalls besteht die Möglichkeit, sich eine aktuelle Videoaufnahme auf einem bereitgestellten Bildschirm anzusehen. Allerdings wäre es somit erforderlich, dass ein Passagier durchgehend die Videoaufnahme beobachtet oder oft darauf zugreift, um sich zu vergewissern, dass nicht ein unautorisierter Zugriff auf sein Gepäck erfolgt. Mittels des beschriebenen Verfahrens ist keine kontinuierliche Beobachtung der Videoaufnahme erforderlich und der Passagier wird lediglich dann davon in Kenntnis gesetzt, wenn sein Gepäck zum Beispiel wirklich bewegt, verschoben, entfernt oder geöffnet wurde. Dies erfolgt mittels eines personalisierten Hinweises, der insbesondere auf ein zugeordnetes Smartphone des Passagiers gesendet wird.

Das Personalisieren des identifizierten Gepäckstücks und das Senden eines Hinweissignals umfassen ein Zuordnen des identifizierten Gepäckstücks zu einem mobilen Endgerät, welches dazu befähigt ist, mit dem Videoüberwachungssystem signaltechnisch zu kommunizieren. Ein Senden eines Hinweissignals erfolgt dann in Abhängigkeit von dem Zuordnen des identifizierten Gepäckstücks zu dem mobilen Endgerät. Das mobile Endgerät ist insbesondere als Smartphone, Mobiltelefon oder Tablet realisiert.

Das Hinweissignals kann an das zugeordnete mobile Endgerät insbesondere in Form einer akustischen Mitteilung, einer visuellen Mitteilung und/oder einer Push-Mitteilung gesendet wird. Ein Hinweis kann somit als Ton, als Anzeige auf dem Display und/oder als Vibration ausgegeben werden.

Gemäß einer Weiterbildung des Verfahrens oder einer der zuvor beschriebenen Weiterbildungen umfasst die vorgegebene Manipulationsbedingung einen räumlichen Schwellenwert, der repräsentativ für eine zulässige Verschiebung des identifizierten Gepäckstücks ist. Das Ermitteln einer Manipulation des identifizierten Gepäckstücks umfasst dann ein Ermitteln einer Verschiebung des identifizierten Gepäckstücks in Abhängigkeit von Messsignalen der Videokamera und ein Abgleichen der ermittelten Verschiebung mit dem vorgegebenen räumlichen Schwellenwert. Ein Senden eines Hinweissignals erfolgt dann in Abhängigkeit von dem Abgleichen der ermittelten Verschiebung mit dem räumlichen Schwellenwert. Das Ermitteln einer Verschiebung des identifizierten Gepäckstücks kann dabei eine translatorische Bewegung oder ein Drehen des identifizierten Gepäckstücks umfassen. Beispielsweise ist ein Toleranzwert von 5-10 cm als räumlicher Schwellenwert vorgegeben, der bei einem Überschreiten zum Aussenden des Hinweissignals an das Smartphone führt. Alternativ kann aber auch ein Schwellenwert von etwa 0 cm vorgegeben werden, um jegliche Bewegung als Manipulation zu deuten. Entsprechend häufig würde ein Hinweissignal ausgesendet werden.

Ein räumlicher Schwellenwert kann zum Beispiel auch individuell von dem Passagier und Nutzer des Smartphones vorgegeben werden. Beispielsweise möchte der Passagier lediglich davon in Kenntnis gesetzt werden, wenn sein Gepäckstück mehr als 30 cm bewegt wurde. Dies betrifft zum Beispiel auch ein Umsortieren oder Neuordnen der Gepäckstücke in einer Gepäckablage. Zum Beispiel möchte ein Passagier die bereits abgelegten Gepäckstücke neu ordnen, um den verfügbaren Stauraum besser auszunutzen und sein eigenes Gepäck verstauen zu können. Der Passagier mit seinem bereits abgelegten und identifizierten Gepäckstück wird mittels des Hinweissignals darüber informiert, dass sein Gepäck bewegt wurde.

Der räumliche Schwellenwert kann ferner repräsentativ für eine Öffnungsbewegung des identifizierten Gepäckstücks sein, sodass das Verfahren ein Ermitteln einer Öffnungsbewegung des identifizierten Gepäckstücks in Abhängigkeit von Messsignalen der Videokamera umfasst. Gemäß einer solchen Weiterbildung erfolgt ein Abgleichen der ermittelten Öffnungsbewegung mit dem vorgegebenen räumlichen Schwellenwert, und das Senden eines Hinweissignals wird in Abhängigkeit von dem Abgleichen der ermittelten Öffnungsbewegung mit dem räumlichen Schwellenwert durchgeführt. Eine solche Weiterbildung des Verfahrens berücksichtigt, dass das zu überwachende Gepäckstück nicht zwangsläufig bewegt werden muss, sondern auch unbefugt geöffnet werden kann, um zum Beispiel einen Inhalt zu entwenden.

Gemäß einer Weiterbildung des Verfahrens oder einer der zuvor beschriebenen Weiterbildungen umfasst die vorgegebene Manipulationsbedingung einen zeitlichen Schwellenwert, der repräsentativ für eine zulässige Zeitdauer in Bezug auf ein Verdecken des identifizierten Gepäckstücks ist. Das Ermitteln einer Manipulation des identifizierten Gepäckstücks umfasst dann ein Ermitteln eines Verdeckens des identifizierten Gepäckstücks und einer Verdeckungszeitdauer in Abhängigkeit von Messsignalen der Videokamera, und ein Abgleichen der ermittelten Verdeckungszeitdauer mit dem vorgegebenen Zeitschwellenwert. Das Senden eines Hinweissignals in Abhängigkeit von dem Abgleichen der Verdeckungszeitdauer mit dem Zeitschwellenwert. Auf diese Weise kann berücksichtigt werden, dass auf Basis der Bilddaten der Videokamera keine uneingeschränkte Überwachung des Gepäckstücks mehr möglich ist, da sich zum Beispiel eine Person ungewöhnlich lange vor der Gepäckablage befindet. Zum Beispiel kann ein Zeitablauf von 20 Sekunden als zeitlicher Schwellenwert das Aussenden des Alarmsignals bzw. des Hinweissignals triggern.

Gemäß einer Weiterbildung des Verfahrens oder einer der zuvor beschriebenen Weiterbildungen umfasst das Identifizieren des Gepäckstücks in dem Fahrzeuginnenraum und das Ermitteln einer Manipulation ein Detektieren von Kanten und/oder Erfassen von Umrissen eines Objekts, und ein Klassifizieren des Objekts als ein Gepäckstück in Abhängigkeit von dem Detektieren von Kanten und/oder dem Erfassen von Umrissen des Objekts. Eine solche Kantendetektion oder das Erfassen von Umrissen ermöglicht eine automatisierte Gepäckstückerkennung.

Alternativ oder zusätzlich kann ein automatisiertes Erkennen eines Gepäckstücks auf dem Erfassen eines Objekts in dem Fahrzeuginnenraum in Abhängigkeit von den ermittelten Bilddaten basieren. Ein Abgleichen des erfassten Objekts erfolgt mit hinterlegten Daten, die Informationen über ein positioniertes Gepäckstück umfassen. Daraufhin erfolgt ein Klassifizieren des Objekts als ein Gepäckstück in Abhängigkeit von dem Abgleichen des erfassten Objekts mit den hinterlegten Daten. Eine solche Gepäckerkennung wird zum Beispiel mit Hilfe eines lernbasierten Algorithmus durchgeführt. Mittels einer Vielzahl von verschiedenen Gepäckstücken, die zum Beispiel in Gepäckablagen unterschiedlich positioniert wurden, kann ein solcher Algorithmus angelernt sein. Auf diese Weise kann eine Anzahl an Falschmeldungen in Bezug auf eine vermeintliche Manipulation des zu überwachenden Gepäckstücks reduziert werden.

Ein Erkennen oder Detektieren eines Gepäckstücks kann automatisch erfolgen und zum Beispiel eine Vorauswahl bereitstellen, die der Passagier auswertet, um sein Gepäckstück auszuwählen. Alternativ kann aber auch durch den Passagier selbst ein digitaler Rahmen aufgezogen oder ein Bereich auf dem Display seiner Smartphones vorgegeben werden, welcher sein Gepäckstück umfasst und welcher beobachtet werden soll.

Das beschriebene Verfahren sowie die beschriebenen Weiterbildungen des Verfahrens nutzen insbesondere ein bestehendes Videoüberwachungssystem des Schienenfahrzeugs zur personalisierten Überwachung von Gepäckablagen. Ein Algorithmus ermöglicht das automatische Erkennen von Gepäckstücken. Ein Passagier kann sich zum Beispiel kabellos mittels seines Smartphones in das Videoüberwachungssystem einwählen bzw. eine Videoaufnahme des Videoüberwachungssystems auswählen. Das Smartphone des Passagiers und das Videoüberwachungssystem des Schienenfahrzeugs sind dann dazu befähigt, signaltechnisch miteinander zu kommunizieren. Eine Vorauswahl an detektierten Gepäckstücken kann nun auf dem Display des Smartphones angezeigt werden. Der Passagier kann daraufhin das Gepäckstück auswählen, welches er zu überwachen wünscht. Dies ist üblicherweise sein Gepäckstück. Eine solche Selektion erfolgt zum Beispiel durch Markierung mittels Fingerdruck auf dem Display des Smartphones.

Das Videoüberwachungssystem des Schienenfahrzeugs wird somit zusätzlich dazu genutzt, das ausgewählte Gepäckstück in Bezug auf eine mögliche Manipulation zu überwachen. Eine solche Manipulation kann ein Verdecken, ein Bewegen, ein Umsortieren, ein Drehen, ein Öffnen und/oder das Entfernen des Gepäckstücks umfassen. Wird eine solche Aktivität erfasst, wird der Passagier mittels eines Hinweissignals darauf aufmerksam gemacht. Dies kann zum Beispiel mittels einer sogenannten Push-Mitteilung auf sein Smartphone erfolgen. Daraufhin kann sich der Passagier in das Videoüberwachungssystem einwählen oder einloggen und kontrollieren, was die Benachrichtigung ausgelöst hat und was mit seinem Gepäckstück passiert. Dabei kann mittels einer entsprechend vorgegebenen Manipulationsbedingung zum Beispiel berücksichtigt werden, dass das zu überwachende Gepäckstück lediglich verschoben und nicht entwendet wurde, um weitere Gepäckstück in der Gepäckablage verstauen zu können. In einem solchen Fall erfolgt vorzugsweise kein Alarmsignal an das Smartphone des Passagiers.

Das beschriebene Verfahren ermöglicht somit eine zuverlässige und komfortable Überwachung eines Gepäckstücks und ein personalisiertes Alarmieren des Passagiers, der das Gepäckstück automatisiert zu beobachten wünscht. Das Verfahren kann ferner dazu genutzt werden, den Passagier auf seinem Smartphone darüber zu informieren, dass er sein Gepäckstück beim Verlassen des Schienenfahrzeugs nicht vergessen soll. Eine solche Benachrichtigung erfolgt vorzugsweise kurz vor dem geplanten Ausstieg und basiert zum Beispiel auf vorhandene elektronische Ticketinformationen und/oder eines zugehörigen Accounts des Reisenden bzw. des Passagiers.

Ein weiterer Aspekt der Erfindung betrifft eine Vorrichtung zum Betreiben eines Videoüberwachungssystems für ein Schienenfahrzeug zur Objektüberwachung, die dazu eingerichtet ist, eines der zuvor beschriebenen Verfahren durchzuführen. Die Vorrichtung realisiert zum Beispiel eine Steuer- oder Kontrolleinheit und ist beispielsweise ein Teil des Videoüberwachungssystems. Alternativ ist die Vorrichtung zum Beispiel eine übergeordnete Steuervorrichtung oder eine Steuereinheit des Schienenfahrzeugs, die ein Verarbeiten von Signalen und/oder Informationen des Videoüberwachungssystems ermöglicht.

Alternativ oder zusätzlich kann eine zu dem Schienenfahrzeug externe Servereinheit dazu eingerichtet sein, eines der beschriebenen Verfahren durchzuführen. Die Servereinheit und das Schienenfahrzeug sind dann dazu befähigt, signaltechnisch miteinander zu kommunizieren.

Gemäß einem weiteren Aspekt weist ein Schienenfahrzeug einen Wagenkasten und ein Videoüberwachungssystem auf, das mit dem Wagenkasten gekoppelt ist, wobei das Videoüberwachungssystem einem Fahrzeuginnenraum des Wagenkastens zugeordnet ist und eine Videokamera aufweist, in deren Blickfeld eine Gepäckablage beobachtbar ist. Das Schienenfahrzeug weist ferner eine Ausgestaltung der zuvor beschriebenen Vorrichtung auf, die dazu befähigt ist, ein Verfahren zum Betreiben des Videoüberwachungssystems durchzuführen. Die Vorrichtung ist signaltechnisch mit der Videokamera gekoppelt.

Dadurch, dass die Vorrichtung dazu ausgebildet ist, eines der zuvor beschriebenen Verfahren zum Betreiben des Videoüberwachungssystems zur Objektüberwachung durchzuführen, sind beschriebene Eigenschaften und Merkmale des Verfahrens auch für die Vorrichtung und für das Schienenfahrzeug offenbart und umgekehrt. Das beschriebene Verfahren ist insbesondere für eine zuverlässige Gepäcküberwachung in einem Schienenfahrzeug nutzbringend durchführbar, kann aber zum Beispiel auch zur Überwachung einer Garderobe in einem Restaurant oder einem anderen öffentlich zugänglichen Ort eingesetzt werden, welchem eine Videokamera zugeordnet ist, deren Videoaufnahme mittels eines mobilen Endgeräts einsehbar ist.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Es zeigen:
- Figur 1: eine schematische Darstellung eines Schienenfahrzeugs mit einem Videoüberwachungssystem,
- Figur 2: ein Ablaufdiagramm für ein Verfahren zum Betreiben des Videoüberwachungssystems zur Objektüberwachung.

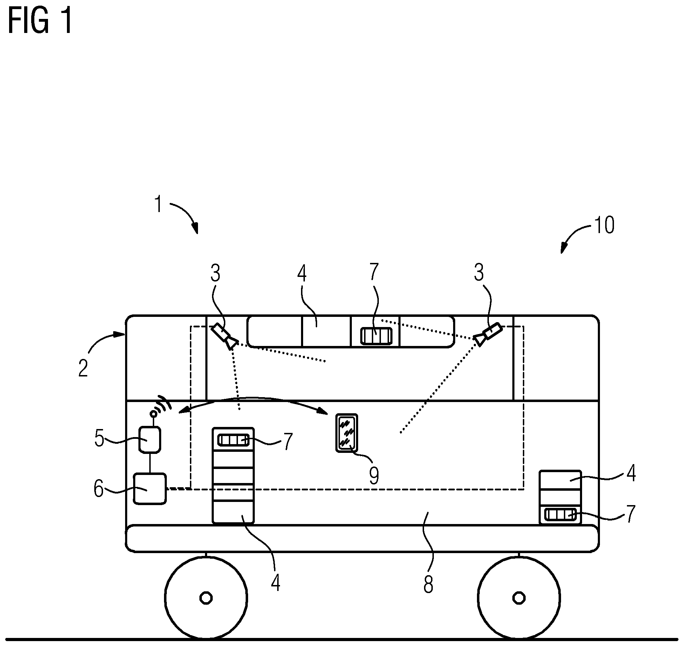

Figur 1 zeigt in einer schematischen Seitenansicht ein Schienenfahrzeug 1 mit einem Videoüberwachungssystem 10, das zwei Videokameras 3 aufweist. Das Videoüberwachungssystem 10 ist einem Fahrzeuginnenraum 8 eines Wagenkastens 2 des Schienenfahrzeugs 1 zugeordnet und ermöglicht eine Beobachtung des Fahrzeuginnenraums 8 und eine Überwachung von darin befindlichem Gepäck. Zum Beispiel sind mehrere Gepäckablagen 4 in dem Fahrzeuginnenraum 8 vorgesehen, die ein Verstauen von Gepäckstücken 7 ermöglichen. Die Videokameras 3 und die Gepäckablagen 7 sind üblicherweise so ausgerichtet, dass die Gepäckablagen 7 in dem Blickfeld der Videokameras 3 angeordnet sind bzw. der Aufnahmebereich der Videokameras 3 eine oder mehrere Gepäckablagen 7 umfasst.

Das Videoüberwachungssystem 10 ist zum Beispiel als CCTV-Überwachungssystem realisiert, welches eine in sich geschlossene Videoüberwachungsanlage repräsentiert. Eine Steuereinheit 6 ist signaltechnisch mit den Videokameras 3 gekoppelt und dazu eingerichtet, das Videoüberwachungssystem 10 zu betreiben. Ferner ist die Steuereinheit 6 mit einer Kommunikationseinheit 5 gekoppelt, die eine kabellose, signaltechnische Kommunikation des Videoüberwachungssystems 10 mit einem mobilen Endgerät 9 ermöglicht.

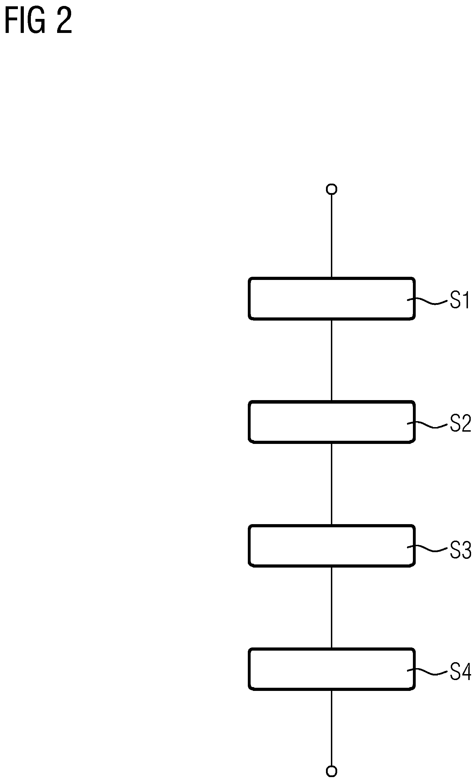

Wie nachfolgend erläutert wird, ermöglicht ein Verfahren mittels des Videoüberwachungssystems 10 eine zuverlässige und personalisierte Gepäcküberwachung in dem Fahrzeuginnenraum 8 des Schienenfahrzeugs 1. Ein solches Verfahren zur Objektüberwachung kann gemäß dem in Figur 2 gezeigten Ablaufdiagramm durchgeführt werden. In einem Schritt S1 werden Messsignale einer Videokamera 3 erfasst, die repräsentativ sind für Bilddaten einer Umgebung des Fahrzeuginnenraums 8 des Schienenfahrzeugs 1, innerhalb der auch eine Gepäckablage 4 angeordnet ist.

In einem Schritt S2 werden Bilddaten der Umgebung des Fahrzeuginnenraums 8 in Abhängigkeit von dem erfassten Messsignal ermittelt und ein Gepäckstücks 7 in dem Fahrzeuginnenraum 8 in Abhängigkeit von den ermittelten Bilddaten identifiziert. Das identifizierte Gepäckstück 7 wird für eine Personalisierung bereitgestellt.

Eine Personalisierung des Gepäckstücks 7 erfolgt in einem weiteren Schritt S3, indem zum Beispiel ein Passagier in dem Schienenfahrzeug 1 mittels eines mobilen Endgeräts 9 das identifizierte Gepäckstück 7 auswählt. Das mobile Endgerät ist insbesondere als Smartphone 9 ausgebildet. Das zu überwachende Gepäckstück 7 wird somit dem Smartphone eines Passagiers zugeordnet und verknüpft.

In einem weiteren Schritt S4 wird anhand weiterer Bilddaten der Videokamera 3 und in Abhängigkeit von einer vorgegebenen Manipulationsbedingung ermittelt, ob eine Manipulation des identifizierten Gepäckstücks 7 vorliegt oder nicht. Wird eine Manipulation erkannt, so wird ein Hinweissignal in Abhängigkeit von der ermittelten Manipulation und von dem Personalisieren des identifizierten Gepäckstücks 7 ausgesendet. Das Hinweissignal wird zum Beispiel als akustischer Ton, als visuelle Anzeige auf dem Display und/oder als Vibration des Smartphones des Passagiers ausgegeben.

Das beschriebene Verfahren ermöglicht mittels des Videoüberwachungssystems 10 des Schienenfahrzeugs 1 eine personalisierte Überwachung von Gepäckablagen 4. Ein Algorithmus ermöglicht ein automatisches Erkennen von Gepäckstücken 7. Ein Passagier kann sich zum Beispiel kabellos mittels seines Smartphones in das Videoüberwachungssystem 10 einwählen bzw. eine Videoaufnahme des Videoüberwachungssystems verfolgen. Eine Vorauswahl an detektierten Gepäckstücken 7 kann auf dem Display des Smartphones angezeigt werden und der Passagier kann das zu überwachende Gepäckstück 7 auswählen.

Das Videoüberwachungssystem 10 des Schienenfahrzeugs 1 wird somit genutzt, um das ausgewählte Gepäckstück 7 in Bezug auf eine mögliche Manipulation zu überwachen. Eine solche Manipulation kann ein Verdecken, ein Bewegen, ein Umsortieren, ein Drehen und/oder ein Öffnen des Gepäckstücks umfassen und durch Abgleichen mit einer entsprechenden Manipulationsbedingung ermittelt werden. Zum Beispiel wird ein räumlicher Schwellenwert vorgegeben, der eine tolerierbare Bewegung des Gepäckstücks 7 erlaubt. Beim Überschreiten des räumlichen Schwellenwerts wird eine Manipulation ermittelt und der zugehörige Passagier wird mittels eines Hinweissignals darauf aufmerksam gemacht.

Daraufhin kann sich der Passagier in das Videoüberwachungssystem 10 einloggen und die aktuelle Videoaufnahme mit der darin befindlichen Gepäckablage 4 kontrollieren. Somit kann der Passagier überprüfen, was die Benachrichtigung ausgelöst hat und was mit seinem Gepäckstück 7 passiert.

Das beschriebene Verfahren ermöglicht somit eine zuverlässige, komfortable und automatisierte Überwachung eines jeweiligen Gepäckstücks 7 und ein personalisiertes Alarmieren des Passagiers, der mit dem Gepäckstück 7 verknüpft ist.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Schienenfahrzeug
- 2: Wagenkasten des Schienenfahrzeugs
- 3: Videokamera
- 4: Gepäckablage
- 5: Kommunikationseinheit des Schienenfahrzeugs
- 6: Steuereinheit des Schienenfahrzeugs
- 7: Gepäckstück
- 8: Fahrzeuginnenraum des Schienenfahrzeugs
- 9: mobiles Endgerät / Smartphone
- 10: Videoüberwachungssystem

- S(i): Schritt eines Verfahrens zum Betreiben eines Videoüberwachungssystems für das Schienenfahrzeug

## Patentansprüche

1. Verfahren zur Objektüberwachung mittels eines Videoüberwachungssystems (10) für ein Schienenfahrzeug (1), dem eine Videokamera (3) zugeordnet ist, umfassend:
- Erfassen eines Messsignals der Videokamera (3), das repräsentativ ist für Bilddaten einer Umgebung eines Fahrzeuginnenraums (8) des Schienenfahrzeugs (1),
- Ermitteln von Bilddaten der Umgebung des Fahrzeuginnenraums (8) in Abhängigkeit von dem erfassten Messsignal,
- Identifizieren eines Gepäckstücks (7) in dem Fahrzeuginnenraum (8) in Abhängigkeit von den ermittelten Bilddaten,
- Personalisieren des identifizierten Gepäckstücks (7) umfassend ein Zuordnen des identifizierten Gepäckstücks (7) zu einem mobilen Endgerät (9), das dazu befähigt ist, mit dem Videoüberwachungssystem (10) signaltechnisch zu kommunizieren,
- Ermitteln einer Manipulation des identifizierten Gepäckstücks (7) in Abhängigkeit von einer vorgegebenen Manipulationsbedingung, und
- Senden eines Hinweissignals in Abhängigkeit von der ermittelten Manipulation und von dem Personalisieren des identifizierten Gepäckstücks (7) und von dem Zuordnen des identifizierten Gepäckstücks (7) zu dem mobilen Endgerät (9) .

2. Verfahren nach Anspruch 1, bei dem das Hinweissignals an das zugeordnete mobile Endgerät (9) in Form einer akustischen Mitteilung, einer visuellen Mitteilung und/oder einer Push-Mitteilung gesendet wird.

3. Verfahren nach einem der Ansprüche 1 oder 2, bei dem die vorgegebene Manipulationsbedingung einen räumlichen Schwellenwert umfasst, der repräsentativ für eine zulässige Verschiebung des identifizierten Gepäckstücks (7) ist, und bei dem das Ermitteln einer Manipulation des identifizierten Gepäckstücks (7) umfasst:
- Ermitteln einer Verschiebung des identifizierten Gepäckstücks (7) in Abhängigkeit von Messsignalen der Videokamera (3),
- Abgleichen der ermittelten Verschiebung mit dem vorgegebenen räumlichen Schwellenwert, und
- Senden eines Hinweissignals in Abhängigkeit von dem Abgleichen der ermittelten Verschiebung mit dem räumlichen Schwellenwert.

4. Verfahren nach Anspruch 3, bei dem das Ermitteln einer Verschiebung des identifizierten Gepäckstücks (7) umfasst:
Ermitteln eines Drehens des identifizierten Gepäckstücks (7) .

5. Verfahren nach einem der Ansprüche 1 bis 4, bei dem die vorgegebene Manipulationsbedingung einen räumlichen Schwellenwert umfasst, der repräsentativ für eine Öffnungsbewegung des identifizierten Gepäckstücks (7) ist, und bei dem das Ermitteln einer Manipulation des identifizierten Gepäckstücks (7) umfasst:
- Ermitteln einer Öffnungsbewegung des identifizierten Gepäckstücks (7) in Abhängigkeit von Messsignalen der Videokamera (3),
- Abgleichen der ermittelten Öffnungsbewegung mit dem vorgegebenen räumlichen Schwellenwert, und
- Senden eines Hinweissignals in Abhängigkeit von dem Abgleichen der ermittelten Öffnungsbewegung mit dem räumlichen Schwellenwert.

6. Verfahren nach einem der Ansprüche 1 bis 5, bei dem die vorgegebene Manipulationsbedingung einen zeitlichen Schwellenwert umfasst, der repräsentativ für eine zulässige Zeitdauer in Bezug auf ein Verdecken des identifizierten Gepäckstücks (7) ist, und bei dem das Ermitteln einer Manipulation des identifizierten Gepäckstücks (7) umfasst:
- Ermitteln eines Verdeckens des identifizierten Gepäckstücks (7) und einer Verdeckungszeitdauer in Abhängigkeit von Messsignalen der Videokamera (3),
- Abgleichen der ermittelten Verdeckungszeitdauer mit dem vorgegebenen Zeitschwellenwert, und
- Senden eines Hinweissignals in Abhängigkeit von dem Abgleichen der Verdeckungszeitdauer mit dem Zeitschwellenwert.

7. Verfahren nach einem der Ansprüche 1 bis 6, bei dem das Identifizieren des Gepäckstücks (7) in dem Fahrzeuginnenraum (8) und das Ermitteln einer Manipulation umfassen:
- Detektieren von Kanten und/oder Erfassen von Umrissen eines Objekts, und
- Klassifizieren des Objekts als ein Gepäckstück (7) in Abhängigkeit von dem Detektieren von Kanten und/oder dem Erfassen von Umrissen des Objekts.

8. Verfahren nach einem der Ansprüche 1 bis 7, bei dem das Identifizieren des Gepäckstücks (7) in dem Fahrzeuginnenraum (8) und das Ermitteln einer Manipulation umfassen:
- Erfassen eines Objekts in dem Fahrzeuginnenraum (8) in Abhängigkeit von den ermittelten Bilddaten,
- Abgleichen des erfassten Objekts mit hinterlegten Daten, die Informationen über ein positioniertes Gepäckstück umfassen, und
- Klassifizieren des Objekts als ein Gepäckstück (7) in Abhängigkeit von dem Abgleichen des erfassten Objekts mit den hinterlegten Daten.

9. Vorrichtung (6) zum Betreiben eines Videoüberwachungssystems (10) für ein Schienenfahrzeug (1) zur Objektüberwachung, die dazu eingerichtet ist, ein Verfahren nach einem der Ansprüche 1 bis 8 durchzuführen.

10. Schienenfahrzeug (1), umfassend:
- einen Wagenkasten (2),
- ein Videoüberwachungssystem (10), das mit dem Wagenkasten (2) gekoppelt ist und das eine Videokamera (3) aufweist, die einem Fahrzeuginnenraum (8) des Wagenkastens (2) zugeordnet ist, und
- eine Vorrichtung (6) nach Anspruch 9 zum Betreiben des Videoüberwachungssystems (10) zur Objektüberwachung, die signaltechnisch mit der Videokamera (3) gekoppelt ist.

## Claims

1. Method for object monitoring by means of a video monitoring system (10) for a rail vehicle (1) to which a video camera (3) is assigned, comprising:
- capturing a measurement signal of the video camera (3), which measurement signal is representative of image data of an environment of a vehicle interior (8) of the rail vehicle (1),
- determining image data of the environment of the vehicle interior (8) depending on the captured measurement signal,
- identifying a piece of luggage (7) in the vehicle interior (8) depending on the determined image data,
- personalizing the identified piece of luggage (7), comprising assigning the identified piece of luggage (7) to a mobile terminal (9) that is capable of communicating with the video monitoring system (10) in terms of signalling technology,
- determining a manipulation of the identified piece of luggage (7) depending on a predefined manipulation condition, and
- sending a notification signal depending on the determined manipulation and depending on the personalizing of the identified piece of luggage (7) and depending on the assigning of the identified piece of luggage (7) to the mobile terminal (9) .

2. Method according to Claim 1, wherein the notification signal is sent to the assigned mobile terminal (9) in the form of an acoustic notification, a visual notification and/or a push notification.

3. Method according to either of Claims 1 and 2, wherein the predefined manipulation condition comprises a spatial threshold value that is representative of a permissible displacement of the identified piece of luggage (7), and wherein determining a manipulation of the identified piece of luggage (7) comprises:
- determining a displacement of the identified piece of luggage (7) depending on measurement signals of the video camera (3),
- comparing the determined displacement with the predefined spatial threshold value, and
- sending a notification signal depending on the comparing of the determined displacement with the spatial threshold value.

4. Method according to Claim 3, wherein determining a displacement of the identified piece of luggage (7) comprises: determining a rotation of the identified piece of luggage (7).

5. Method according to any of Claims 1 to 4, wherein the predefined manipulation condition comprises a spatial threshold value that is representative of an opening movement of the identified piece of luggage (7), and wherein determining a manipulation of the identified piece of luggage (7) comprises:
- determining an opening movement of the identified piece of luggage (7) depending on measurement signals of the video camera (3),
- comparing the determined opening movement with the predefined spatial threshold value, and
- sending a notification signal depending on the comparing of the determined opening movement with the spatial threshold value.

6. Method according to any of Claims 1 to 5, wherein the predefined manipulation condition comprises a temporal threshold value that is representative of a permissible time duration with regard to concealment of the identified piece of luggage (7), and wherein determining a manipulation of the identified piece of luggage (7) comprises:
- determining a concealment of the identified piece of luggage (7) and a concealment time duration depending on measurement signals of the video camera (3),
- comparing the determined concealment time duration with the predefined time threshold value, and
- sending a notification signal depending on the comparing of the concealment time duration with the time threshold value.

7. Method according to any of Claims 1 to 6, wherein identifying the piece of luggage (7) in the vehicle interior (8) and determining a manipulation comprise:
- detecting edges and/or capturing contours of an object, and
- classifying the object as a piece of luggage (7) depending on the detecting of edges and/or the capturing of contours of the object.

8. Method according to any of Claims 1 to 7, wherein identifying the piece of luggage (7) in the vehicle interior (8) and determining a manipulation comprise:
- capturing an object in the vehicle interior (8) depending on the determined image data,
- comparing the captured object with stored data comprising information about a positioned piece of luggage, and
- classifying the object as a piece of luggage (7) depending on the comparing of the captured object with the stored data.

9. Device (6) for operating a video monitoring system (10) for a rail vehicle (1) for object monitoring, which device is configured to carry out a method according to any of Claims 1 to 8.

10. Rail vehicle (1), comprising:
- a vehicle body (2),
- a video monitoring system (10) coupled to the vehicle body (2) and having a video camera (3) assigned to a vehicle interior (8) of the vehicle body (2), and
- a device (6) according to Claim 9 for operating the video monitoring system (10) for object monitoring, which device is coupled to the video camera (3) in terms of signalling technology.

## Revendications

1. Procédé de surveillance d'objet au moyen d'un système (10) de surveillance vidéo pour un véhicule (1) ferroviaire, auquel une caméra (3) vidéo est affectée, comprenant :
- détection d'un signal de mesure de la caméra (3) vidéo, qui est représentatif de données d'image d'un environnement d'un espace (8) intérieur du véhicule (1) ferroviaire,
- détermination de données d'image de l'environnement de l'espace (8) intérieur du véhicule en fonction du signal de mesure détecté,
- identification d'une pièce (7) de bagage dans l'espace (8) intérieur du véhicule en fonction des données d'image déterminées,
- personnalisation de la pièce (7) de bagage identifiée comprenant une affectation de la pièce (7) de bagage identifiée à un terminal (9) mobile, qui est apte à communiquer en technique du signal avec le système (10) de surveillance vidéo,
- détermination d'une manipulation de la pièce (7) de bagage identifiée en fonction d'une condition de manipulation donnée à l'avance, et
- envoi d'un signal d'indication en fonction de la manipulation déterminée et de la personnalisation de la pièce (7) de bagage identifiée et de l'affectation de la pièce (7) de bagage identifiée au terminal (9) mobile.

2. Procédé suivant la revendication 1, dans lequel on envoie le signal d'indication au terminal (9) mobile affecté sous la forme d'une communication acoustique, d'une communication visuelle et/ou d'une communication push.

3. Procédé suivant l'une des revendications 1 ou 2, dans lequel la condition de manipulation donnée à l'avance comprend une valeur spatiale de seuil, qui est représentative d'un déplacement admissible de la pièce (7) de bagage identifiée, et dans lequel la détermination d'une manipulation de la pièce (7) de bagage identifiée comprend :
- détermination d'un déplacement de la pièce (7) de bagage identifiée en fonction de signaux de mesure de la caméra (3) vidéo,
- égalisation du déplacement déterminé à la valeur spatiale de seuil donnée à l'avance, et
- envoi d'un signal d'indication en fonction de l'égalisation du déplacement déterminé à la valeur spatiale de seuil.

4. Procédé suivant la revendication 3, dans lequel la détermination d'un déplacement de la pièce (7) de bagage identifiée comprend :
détermination d'une rotation de la pièce (7) de bagage identifiée.

5. Procédé suivant l'une des revendications 1 à 4, dans lequel la condition de manipulation donnée à l'avance comprend une valeur spatiale de seuil, qui est représentative d'un mouvement d'ouverture de la pièce (7) de bagage identifiée, et dans lequel la détermination d'une manipulation de la pièce (7) de bagage identifiée comprend :
- détermination d'un mouvement d'ouverture de la pièce (7) de bagage identifiée en fonction de signaux de mesure de la caméra (3) vidéo,
- égalisation du mouvement d'ouverture déterminé à la valeur spatiale de seuil donnée à l'avance, et
- envoi d'un signal d'indication en fonction de l'égalisation du mouvement d'ouverture déterminé à la valeur spatiale de seuil.

6. Procédé suivant l'une des revendications 1 à 5, dans lequel la condition de manipulation donnée à l'avance comprend une valeur temporelle de seuil, qui est représentative d'une durée admissible en rapport à une dissimulation de la pièce (7) de bagage identifiée, et dans lequel la détermination d'une manipulation de la pièce (7) de bagage identifiée comprend :
- détermination d'une dissimulation de la pièce (7) de bagage identifiée et d'une durée de dissimulation en fonction de signaux de mesure de la caméra (3) vidéo,
- égalisation de la durée de dissimulation déterminée à la valeur temporelle de seuil donnée à l'avance, et
- envoi d'un signal d'indication en fonction de l'égalisation de la durée de dissimulation à la valeur temporelle de seuil.

7. Procédé suivant l'une des revendications 1 à 6, dans lequel l'identification de la pièce (7) de bagage dans l'espace (8) intérieur du véhicule et la détermination d'une manipulation comprennent :
- détection de bords et/ou saisie de contours d'un objet, et
- classification de l'objet comme pièce (7) de bagage en fonction de la détection de bords et/ou de la saisie de contours de l'objet.

8. Procédé suivant l'une des revendications 1 à 7, dans lequel l'identification de la pièce (7) de bagage dans l'espace (8) intérieur du véhicule et la détermination d'une manipulation comprennent :
- détection d'un objet dans l'espace (8) intérieur du véhicule en fonction des données d'image déterminées,
- égalisation de l'objet détecté à des données mises en mémoire, qui comprennent des informations sur une pièce de bagage mise en position, et
- classification de l'objet comme pièce (7) de bagage en fonction de l'égalisation de l'objet détecté aux données mises en mémoire.

9. Dispositif (6) pour faire fonctionner un système (10) de surveillance vidéo pour un véhicule (1) ferroviaire pour la surveillance d'objet, qui est agencé pour effectuer un procédé suivant l'une des revendications 1 à 8.

10. Véhicule (1) ferroviaire, comprenant :
- une caisse (2),
- un système (10) de surveillance vidéo, qui est relié à la caisse (2) et qui a une caméra (3) vidéo qui est affectée à un espace (8) intérieur de véhicule de la caisse (2), et
- un dispositif (6) suivant la revendication 9 pour faire fonctionner le système (10) de surveillance vidéo pour la surveillance d'objet, qui est relié en technique du signal à la caméra (3) vidéo.
